# EUROPÄISCHE PATENTANMELDUNG

(11) **EP 2 028 750 A2**
(43) Veröffentlichungstag der Anmeldung: **25.02.2009**
(21) Anmeldenummer: 08013768.0
(22) Anmeldetag: 31.07.2008
(51) Int. Cl.: H02K 55/04, H02K 1/24

(54) **Wickelkörper für eine Sattelspulenwicklung**

(30) Priorität: 23.08.2007 DE 102007039889
(71) Anmelder: Zenergy Power GmbH, 53359 Rheinbach (DE)
(72) Erfinder: Wiezoreck, Jan, Dr., 53117 Bonn (DE)
(74) Vertreter: Prietsch, Reiner

(57) **Zusammenfassung**

Ein Wickelkörper 80 mit einem Wicklungsträger 85 zwischen einer ersten Platte 82 und einer zweiten Platte für eine Sattelspulenwicklung aus einem Dünnschicht-HTSL die für einen zylindrischen Läufer einer elektrischen Maschine bestimmt ist und die zwei zur Läuferachse parallele Längsschenkel zwischen zwei Wicklungsköpfen hat, wobei der der Wicklungsträger für jeden Wicklungskopf eine Anlagefläche 85.1 hat, ermöglicht es den Dünnschicht-HTSL zu zu einer Sattelspule zu wickeln, ohne die HTSL-Dünnschicht zu beschädigen, wenn die erste Platte 82 und die zweite Platte im Bereich der Längsschenkel dem Läuferumfang angepasste Hohlzylindersegmente sind, und jede Anlagefläche 85.1 für einen Wicklungskopf derart tordiert ist, dass die Differenz der Längen der oberen Kante 85.13 der Anlagefläche 85.1 und der unteren Kante 85.12 der Anlagefläche dividiert durch die Breite der Anlagefläche 85.1 und die mittlere Kantenlänge der beiden Kanten 85.12, 85.13 maximal einer Krümmung von etwa 3°/m entspricht.

## Beschreibung

Die Erfindung betrifft einen Wickelkörper mit einem Wicklungsträger zwischen einer ersten Platte und einer zweiten Platte für eine Sattelspulenwicklung aus einem bandförmigen Dünnschicht-Hochtemperatursupraleiter (HTSL), die für einen zylindrischen Läufer einer elektrischen Maschine, wie z.B. einen Elektromotor, bestimmt ist.

Sattelspulen für den Läufer oder Rotor einer elektrischen Maschine wurden bisher aus einem drahtförmigen Leiter mit kreisförmigem Querschnitt gewickelt. Hochtemperatursupraleiter sind jedoch aus fertigungstechnischen Gründen bevorzugt bandförmig, d.h. sie haben einen ausgeprägten Rechteckquerschnitt. Solche bandförmige HTSL bestehen aus einem in der Regel metallischen Substratband, auf dem eine keramische HTSL-Dünnschicht aus z.B. YBa₂Cu₃O₇₋ₓ (YBCO) aufgebracht ist. Diese HTSL werden auch als Dünnschicht-HTSL bezeichnet. Anders als das bandförmige Substrat hat die keramische HTSL-Schicht nur eine geringe Elastizität. Biegungen bandförmiger Dünnschicht-HTSL sind daher auf ein Minimum zu reduzieren, weshalb es schwierig ist, eine Sattelspule aus einem bandförmigen Dünnschicht-HTSL auf einen Läufer zu wickeln.

Aus der US 4 279 944 A ist es bekannt, eine metallische supraleitende Racetrackspule in eine Form aus einem Wickelkörper zwischen zwei planparallelen Platten zu wickeln. Nach dem Wickeln wird die Racetrackspule zunächst in der Form vergossen und nach dem Aushärten entformt. Dieses Vorgehen lässt sich aber nicht auf die Herstellung einer Sattelspule aus einem Dünnschicht-HTSL übertragen, weil beim Bewickeln des
Wickelkörpers die HTSL-Schicht überdehnt würde, d.h. die supraleitende Dünnschicht würde zumindest im oberen Bereich des Bandes abreißen und wäre zumindest teilweise unterbrochen.

Der Erfindung liegt die Aufgabe zugrunde, die Herstellung einer Sattelspule aus einem Dünnschicht-HTSL für einen Läufer einer elektrischen Maschine zu ermöglichen.

Diese Aufgabe ist durch einen Wickelkörper für eine Sattelspulenwicklung, der nachfolgend auch als Sattelspulenwickelkörper bezeichnet wird, nach dem Anspruch 1 gelöst.

Der Sattelspulenwickelkörper hat eine Sandwich-Struktur aus einem Wicklungsträger zwischen einer ersten Platte und einer zweiten Platte. Die erste Platte und die zweite Platte sind zumindest im Bereich der Längsschenkel der Sattelspulenwicklung dem Läuferumfang angepasste Hohlzylindersegmente. Zwischen den beiden Längsschenkeln hat die Sattelspule beidseits je einen Wicklungskopf. Für jeden dieser Wicklungsköpfe hat der Wicklungsträger eine Anlagefläche für den bandförmigen Dünnschicht-HTSL. Die Anlageflächen sind derart tordiert, dass der maximale, parallel zur Zylinderachse gemessene Abstand zwischen den Oberkanten der beiden Anlageflächen kleiner ist als der maximale parallel zur Zylinderachse gemessene Abstand zwischen den Unterkanten der Anlageflächen. Dadurch wird die mittlere Krümmung eines auf die Anlagefläche gewickelten bandförmigen Dünnschicht-HTSL vermindert. Sie ergibt sich im wesentlichen aus der Differenz der Längen der oberen Kante einer Anlagefläche und der unteren Kante der Anlagefläche dividiert durch die Breite der Anlagefläche und die mittlere Kantenlänge der beiden Kanten. Vorzugsweise entspricht die mittlere Krümmung einem Wert kleiner etwa 3°/m. Besonders bevorzugt sind die beiden Kanten gleich lang, d.h. die Differenz ihrer Längen dividiert durch die Breite des Bandes und die mittlere Kantenlänge entspricht einer Krümmung von 0°/m.

Die Differenz der Kantenlängen dividiert durch die Breite des Bandes gibt den Krümmungswinkel im Bogenmaß an. Die Umrechnung in die SI-konforme Gradeinteilung erfolgt durch Multiplikation mit 360/2π. Die Division des so erhaltenen Wertes durch die mittlere Kantenlänge ergibt die mittlere Krümmung in °/m.

Durch die Torsion der Anlagefläche wird ein auf den Wicklungsträger gewickelter bandförmiger Dünnschicht-HTSL ebenfalls entsprechend tordiert. Deshalb wird der bandförmige Dünnschicht-HTSL nicht oder nur minimal um seine sich in Richtung der Dicke des Substratbandes erstreckende Achse verformt. Der Erfindung liegt die Erkenntnis zugrunde, dass ein bandförmiger Dünnschicht-HTSL innerhalb gewisser Grenzen zwar sehr gut um seine Längsachse tordiert und auch um seine Querachse gebogen werden kann, dass jedoch eine Krümmung um die sich in Richtung der Dicke des Substratbandes erstreckende Achse nur in ganz geringen Grenzen toleriert werden kann, weil ansonsten die HTSL-Dünnschicht auf dem Substrat beschädigt wird, wodurch die kritische Stromdichte des bandförmigen Dünnschicht-HTSL stark reduziert wird. Weil durch die Torsion der Anlagefläche und damit des bandförmigen Dünnschicht-HTSL eine Verformung dessen um eine Achse parallel zu seiner Dickenrichtung vermieden wird, kann der Dünnschicht-HTSL auf den Wickelkörper gewickelt werden, ohne dass die HTSL-Dünnschicht beschädigt wird.

Die beiden Platten des Wickelkörpers sind bevorzugt zumindest im Bereich der Längsschenkel zueinander konzentrisch.

Bevorzugt ist der Abstand der beiden Platten im Bereich der Wicklungsköpfe kleiner als der Abstand im Bereich der Längsschenkel. Dadurch kann der Torsion des bandförmigen Dünnschicht-HTSL Rechnung getragen werden, d.h. auch im Bereich der Wicklungsköpfe kann der Dünnschicht-HTSL durch die beiden Platten festgelegt werden.

Zusätzlich kann der Wickelkörper auch für die Längsschenkel der Sattelspulenwicklung Anlageflächen haben. Diese können in einem Bereich so tordiert sein, dass der magnetische Fluss durch die Schmalseiten des bandförmigen HTSL in diesem Bereich maximal wird, wenn der Längsschenkel durch eine Drehung des Läufers in den Bereich gebracht wird, indem die magnetische Flussdichte des von außen auf den Läufer wirkenden Magnetfeldes maximal ist. Dadurch wird der magnetische Fluss in diesem Bereich minimiert, d.h. die kritische Stromdichte durch den bandförmigen Dünnschicht-HTSL entsprechend erhöht.

Wenn jede Platte im Bereich der Längsschenkel der Sattelspulenwicklung ein Überstand über den entsprechenden Längsschenkel hat, dann wird das Band in diesem Bereich zuverlässig festgelegt.

Zur seitlichen Abfangung der Sattelspulenwicklung können die Platten im Bereich der Überstände einander gegenüberliegende Nuten haben, in denen mindestens ein Stützelement für den bandförmigen Dünnschicht-HTSL sitzt.

Bevorzugt hat der Wicklungsträger im Bereich jedes Längsschenkels der Sattelspulenwicklung eine Längsstrebe, die mit zwei parallelen Längskanten auf der ersten Platte aufliegt. Durch die beiden Längskanten liegt die Längsstrebe definiert auf der ersten Platte auf und kann z.B. durch Schweißpunkte mit dieser verbunden werden. Die beiden parallelen Längskanten sind wesentlich einfacher zu fertigen als eine an die Krümmung der ersten Platte angepasste gekrümmte Oberfläche eines Längsschenkels.

Entsprechend können die Längsstreben an ihrer Oberseite jeweils zwei parallele Kanten haben, auf denen die zweite Platte aufliegt.

Bei einem Wicklungsträger mit einem geschlossenen Metallband, das mit einer seiner Schmalseiten auf der Mantelfläche der ersten Platte aufliegt, stellt sich bei entsprechend gewählter Länge des Metallbandes, automatisch die gewünschte Torsion der Anlageflächen im Bereich der Wicklungsköpfe ein, wenn das Metallband zunächst lediglich im Bereich der beiden Längsschenkel der Sattelspulenwicklung fixiert wird.

Zum Fixieren des Metallbandes kann seine Innenseite z.B. mit der Mantelfläche der ersten Platte durch eine Stütze verbunden sein.

Der beschriebene Wickelkörper ermöglicht ein Verfahren zum Herstellen einer Sattelspule aus einem bandförmigen Dünnschicht-HTSL durch Wickeln des bandförmigen Dünnschicht-HTSL auf den Wickelkörper mit einer Wickelmaschine zu einer Sattelspulenwicklung. Anschließend kann der Wickelkörper mit der Sattelspulenwicklung aus der Wickelmaschine entnommen werden. Dabei stützt der Wickelkörper die Sattelspulenwicklung.

Vorzugsweise wird der Dünnschicht-HTSL erst nach dem Entnehmen auf dem Wickelkörper, z.B. mit einem Harz fixiert. Dies hat den Vorteil, dass die Wickelmaschine sofort wieder einsatzbereit ist; insbesondere muss das Aushärten des Harzes nicht abgewartet werden.

Die von der Wickelmaschine entnommene Sattelspule aus dem Wickelkörper und der Sattelspulenwicklung kann als solche, ggf. nach einer Fixierung der Wicklung auf dem Wickelkörper auf einen zylindrischen Läufer für eine elektrische Maschine, z.B. für einen Elektromotor oder einen Generator, befestigt werden. Die Befestigung der Sattelspulenwicklung und die Abfangung der auf diese wirkenden Kräfte wird dadurch enorm vereinfacht; insbesondere wird eine Beschädigung der ansonsten frei liegenden Wicklung verhindert.

Anhand der Zeichnung ist die Erfindung schematisch vereinfacht und beispielhaft dargestellt. Es zeigen:
- Fig. 1:: einen achtpoligen Läufer,
- Fig. 2:: einen weiteren achtpoligen Läufer mit Sattelspulen nach der Erfindung im Querschnitt,
- Fig. 3:: eine Sattelspule des Läufers gemäß Fig. 2 im Querschnitt,
- Fig. 4:: eine weitere Sattelspule im Querschnitt,
- Fig. 5:: einen teilmontierten Wickelkörper im Querschnitt,
- Fig. 6:: einen weiteren teilmontierten Wickelkörper im Querschnitt,
- Fig. 7:: eine Aufsicht auf einen weiteren teilmontierten Wickelkörper und
- Fig. 8a - 8e:: Skizzen eines weiteren teilmontierten Wickelkörpers.

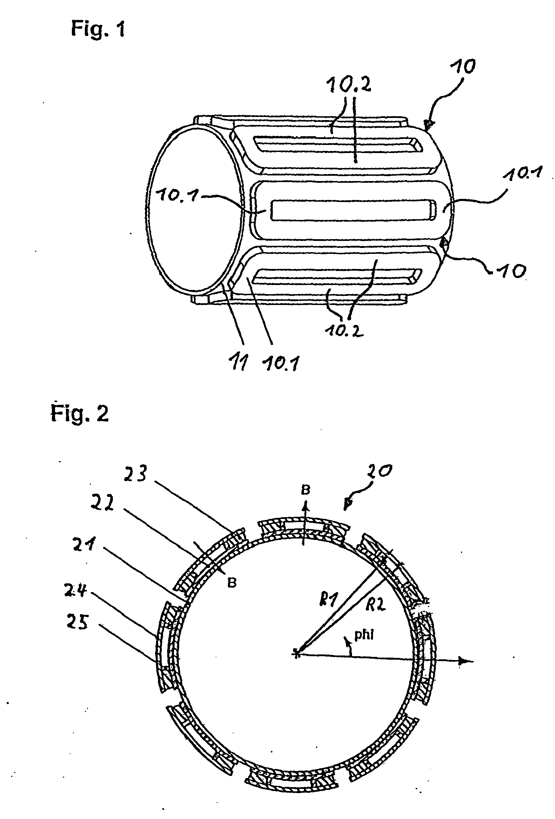

Der Läufer in Fig. 1 hat einen hohlzylindrischen Körper 11, auf dem äquidistant acht Sattelspulen 10 angeordnet sind. Jede Sattelspule 10 hat zwei Wicklungsköpfe 10.1 und zwei Längsschenkel 10.2. Der Einfachheit halber sind die Anschlüsse der Sattelspulen 10, deren Kühlung und die Lagerung des Läufers, sowie weitere den Läufer betreffende Details weggelassen.

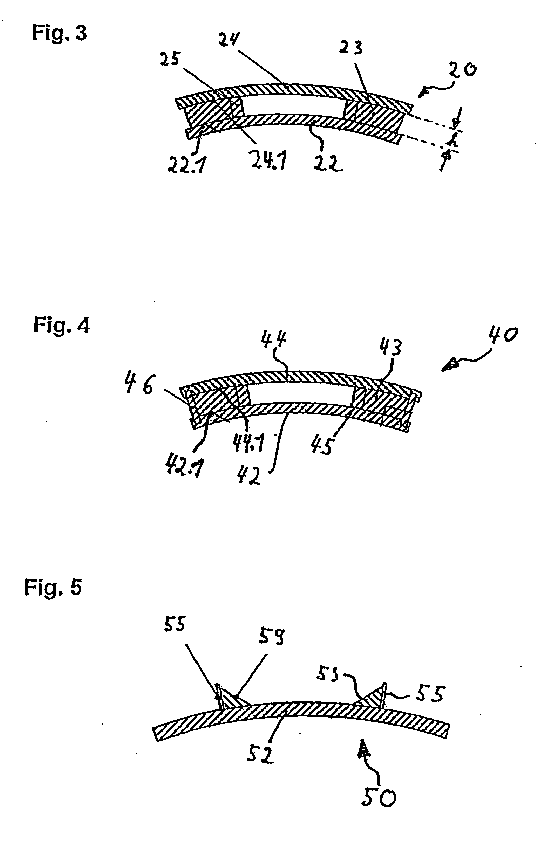

Fig. 2 zeigt einen Schnitt durch einen Läufer wie in Fig. 1 jedoch mit Sattelspulen 20 nach der Erfindung. Die Schnittebene ist orthogonal zur Rotationsachse und liegt im Bereich der Längsschenkel der Sattelspulen 20. Auf dem Hohlzylinder 1 sind acht Sattelspulen 20 befestigt, die in Fig. 3 vergrößert dargestellt sind. Die Sattelspulen 20 bestehen jeweils aus einem Sattelspulenwickelkörper und einer Sattelspulenwicklung 23 aus einem bandförmigen Dünnschicht-HTSL, die auch als HTSL-Wicklung oder nur als Wicklung bezeichnet wird. Der Sattelspulenwickelkörper hat eine erste Platte 22 in Form eines an den Läufer angepassten Segments eines Hohlzylinders, auf dem ein Wicklungsträger 25 befestigt ist. Auf dem Wicklungsträger 25 ist eine zweite Platte befestigt, die ebenfalls die Form eines an den Läufer angepassten Segments 24 eines Hohlzylinders hat. Die beiden Platten 22 und 24 stehen über den Wicklungsträger 25 über, so dass der Sattelspulenwickelkörper eine umlaufende offene Tasche hat, in welcher die Wicklung 23 aus einem bandförmigen Dünnschicht-HTSL sitzt. Die Wicklung 23 kann durch ein Imprägnierharz, z.B. Epoxidharz auf dem Sattelspulenwickelkörper festgelegt sein. Das Imprägnierharz kann u.a. durch Vakuumimprägnieren nach dem Wickeln oder durch Bestreichen des bandförmigen HTSL beim Wickeln aufgebracht werden. Der Innenradius R2 der zweiten Platte 24 entspricht dem Außenradius R1 der ersten Platte 22 zuzüglich der Höhe h des Wickelkörpers 25, damit die Tasche für den bandförmigen HTSL eine gleichbleibende Dicke hat. Die Innenflächen der Tasche, d.h. die einander gegenüberliegenden Flächen der beiden Platten 22, 24 sind im Bereich der Wicklung 23 als Haftflächen 22.1, 24.1 ausgebildet. Durch die Haftung zwischen Wicklung 23 und den Segmenten 22, 24 können an der Wicklung auftretende Kräfte übertragen werden. Kräfte entstehen an der Wicklung z.B. durch die Wechselwirkung von Magnetfeld und Wicklungsstrom und auch durch Rotation des Läufers. Die Übertragung von Kräften führt zu Scherbeanspruchungen in der Wicklung 23.

Fig. 4 zeigt eine weitere Ausführungsform einer Sattelspule im Querschnitt. Die Sattelspule 40 ist weitgehend identisch zu der Sattelspule in Fig. 3, so dass nur auf die Unterschiede eingegangen wird. In der Ausführungsform nach Fig. 4 sind die Innenflächen der Tasche, d.h. die einander gegenüberliegenden Flächen der beiden Platten 42, 44 im Bereich der Wicklung 43, anders als in Fig. 3, als Gleitflächen 42.1, 44.1 ausgebildet. Die Gleitflächen 42.1, 44.1 können aus einer Beschichtung der entsprechenden Flächen mit einem Trennmittel, wie z.B. einer Kunststofffolie, einer Glimmer-Isolierung oder Ähnlichem, bestehen. Durch die Gleitflächen 42.1, 44.1 auf den Innenflächen der Tasche werden nur kleine Scherkräfte zwischen der Wicklung 43 und den Platten 42, 44 übertragen. Dies kann dann vorteilhaft sein, wenn ansonsten zu hohe Scherkräfte in der Wicklung auftreten würden, die zur Zerstörung der Wicklung führen würden. Die Tasche ist durch ein Stützelement 46 verschlossen. Dazu haben die beiden Platten 42 und 44 in ihrem Randbereich einander gegenüberliegende umlaufende Nuten (ohne Bezugszeichen). In diesen Nuten sitzt das Stützelement 46, an welchem die Außenseite der HTSL-Wicklung 43 anliegt. Über das Stützelement 46 können auf die Wicklung 43 wirkende Kräfte in die Platten 42, 44 eingeleitet werden, ohne dass hohe Scherkräfte in der Wicklung 43 entstehen.

Fig. 5 zeigt einen teilmontierten Sattelspulenwickelkörper 50 mit einer ersten Platte 52 in Form eines Hohlzylindersegmentes, auf dem ein in der Aufsicht ovalförmiges Metallband als Wicklungsträger 55 befestigt ist. Das ovalförmige Metallband wurde zunächst im Bereich seiner Längsschenkel an deren Innenseite mit etwa dreieckigen Stützen 59 an der ersten Platte 52 befestigt. Beim Anpassen des geschlossenen Metallbandes an die Krümmung der ersten Platte stellt sich im Bereich der gerundeten Kopfbereiche des ovalförmigen Metallbandes automatisch dessen gewünschte Torsion ein. Der Sattelspulenwickelkörper 50 ist um eine zweite Platte in Form eines Hohlzylindersegmentes (nicht dargestellt) zu ergänzen.

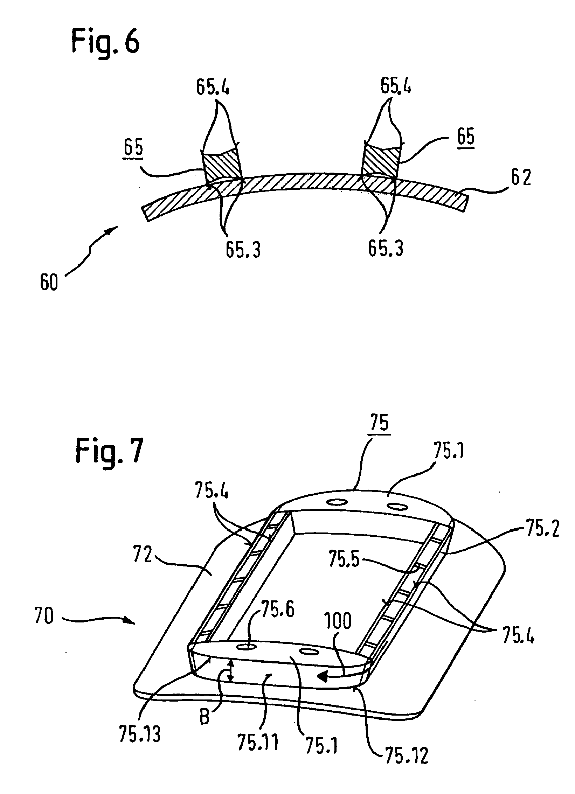

Die in Fig. 6 gezeigte teilmontierte Ausführungsform eines Sattelspulenwickelkörpers 60 hat eine erste Platte 62 in Form eines Hohlzylindersegmentes, auf dem ein Wicklungsträger 65 befestigt ist. Im Gegensatz zu den Wicklungsträgern 25, 45 in Fig. 3 bzw. Fig. 4 liegt der Wicklungsträger 65 im Bereich der Längsschenkel der Sattelspulenwicklug nicht flächig auf der ersten Platte 62 auf, sondern hat einen bikonkaven Querschnitt und infolgedessen zwei parallele Unterkanten 65.3 sowie zwei parallele Oberkanten 65.4. Der Wicklungsträger 65 liegt deshalb auf dem ersten Segment 62 nur linienförmig auf und ist weitgehend unabhängig von der Rundung der ersten Platte 62 auf diesem befestigbar, wodurch die Längsschenkel des Wicklungsträgers 65 für eine Vielzahl von Sattelspulenwickelkörpern verwendbar sind. Entsprechend ist auch eine nicht dargestellte zweite Platte in Form eines Hohlzylindersegmentes einfach und sicher auf den parallelen Oberkanten 65.4 des Wicklungsträgers 65 zu befestigten.

Fig. 7 zeigt einen weiteren teilmontierten Sattelspulenwickelkörper 70. Dargestellt ist eine erste Platte 72 in Form eines Hohlzylindersegmentes, auf dem ein Wicklungsträger 75 befestigt ist. Der Wicklungsträger 75 ist mehrteilig und hat zwei Kopfstücke 75.1. Die Kopfstücke 75.1 liegen formschlüssig auf der ersten Platte 72 auf. Zwischen den beiden Kopfstücken sind zwei Längsstreben 75.2 als Anlage für die Längsschenkel der nicht dargestellten Wicklung. Die Oberseiten der Längsstreben 75.2 haben je eine sich in Längsrichtung erstreckende Ausnehmung mit etwa trapezförmigem Querschnitt (nur angedeutet). Entsprechend hat jede Längsstrebe 75.2 zwei oben liegende Kanten 75.4 auf denen eine nicht dargestellte zweite Platte in Form eines Hohlzylindersegmentes befestigt werden kann. Die nicht sichtbare Unterseite der Längsstreben 75.2 hat ebenfalls eine etwa trapezförmige Ausnehmung, so dass die beiden Längsstreben 75.2 jeweils mit zwei Kanten auf der ersten Platte 72 aufliegen. Zur Befestigung der Längsstreben 75.2 zwischen der ersten Platte 72 und der nicht dargestellten zweiten Platte hat jede Längsstrebe 75.2 eine Reihe von Ausnehmungen 75.5, um die beiden Platten durch die Längsstreben 75.2 zu verbolzen. Entsprechende Ausnehmungen 75.6 sind auch in den beiden Kopfstücken 75.1.

Die beiden Kopfstücke 75.1 haben jeweils eine Anlagefläche 75.11 für den Wicklungskopf (nicht dargestellt) einer Sattelspulenwicklung aus einem bandförmigen Dünnschicht-HTSL. Die Anlageflächen 75.11 haben eine an die Breite des Dünnschicht-HTSL angepasste Breite B. Der Pfeil 100 gibt die Bandrichtung an. Die Anlagefläche 75.11 ist in Bandrichtung 100 so tordiert, dass trotz der Krümmung der ersten Platte 72 und der zweiten Platte die Unterkante 75.12 der Anlagefläche 75.11, d.h. die näher an der Zylinderachse des Läufers liegende Kante der Anlagefläche 75.11 die gleiche Länge hat, wie die Oberkante 75.13 der Anlagefläche 75.11. Entsprechend ist der maximale, parallel zur Zylinderachse gemessene Abstand der beiden Oberkanten 75.13 kleiner als der entsprechende Abstand der beiden Unterkanten 75.12. Ein auf den Wickelkörper gewickelter bandförmiger Dünnschicht-HTSL wird folglich lediglich in Bandrichtung tordiert und quer zur Bandrichtung, d.h. um eine zur Breite B parallele Achse, gekrümmt. Die Krümmung des Bandes um die sich die Richtung der Dicke des Wicklungsträgers 75 angebende Achse ist so klein, dass dadurch die die HTSL-Dünnschicht eines bandförmigen Dünnschicht-HTSL nicht beschädigt wird.

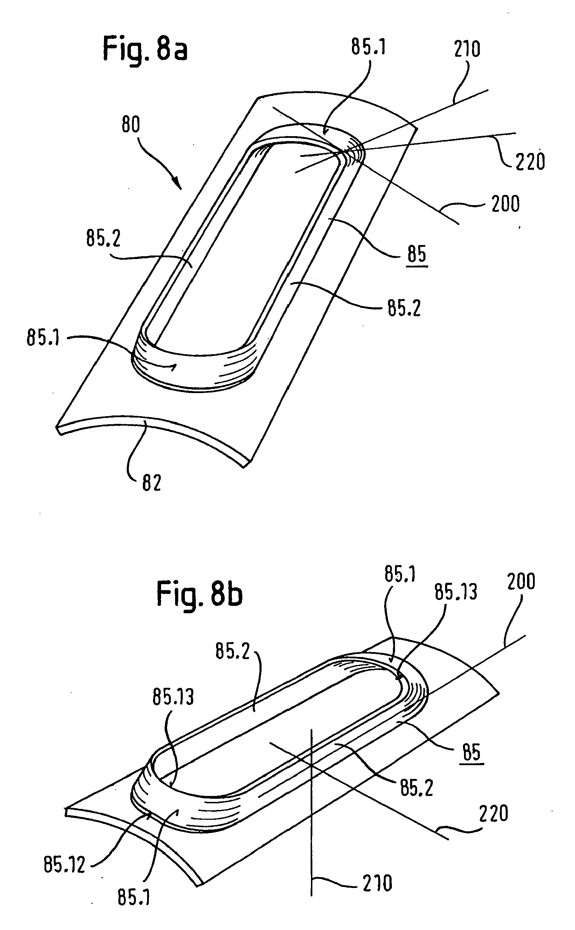

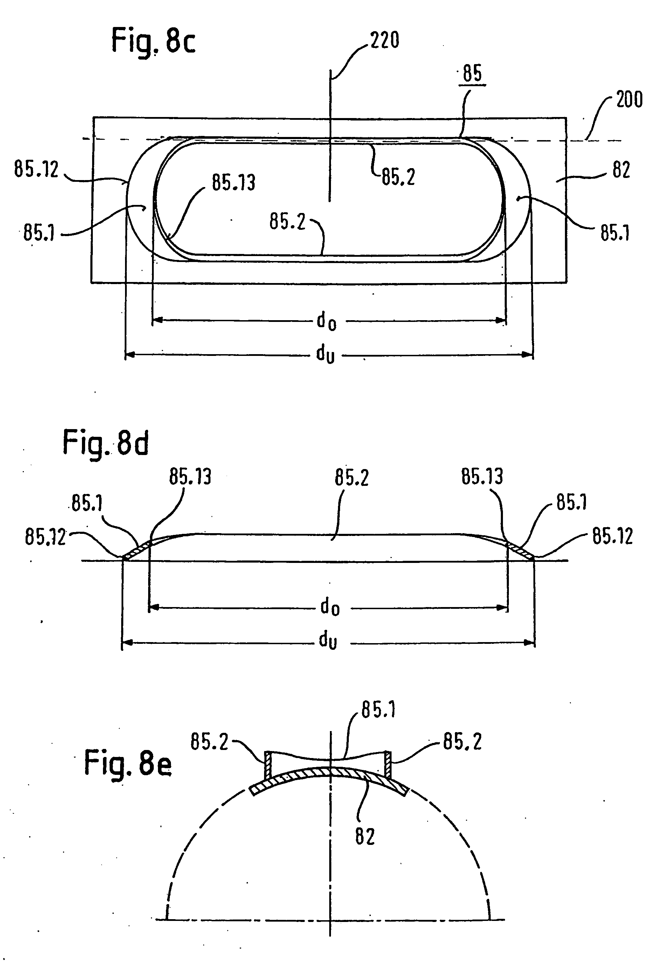

Die Torsion der Anlageflächen im Bereich der Wicklungsköpfe ist besonders gut anhand der Skizzen Fig. 8a bis Fig. 8e zu erkennen. Die Skizzen zeigen einen teilmontierten Sattelspulenwickelkörper 80 mit einer ersten Platte 82 in Form eines Hohlzylindersegementes, auf dem ein etwa ovales Metallband als Wicklungsträger 85 befestigt ist. Im Bereich der Längsschenkel 85.2 des Ovals steht der Wicklungsträger 85 in einem konstanten Winkel auf der Mantelfläche der ersten Platte 82 (vgl. Fig. 8e). Anders als dargestellt kann der Wicklungsträger 85 im Bereich der Längsschenkel 85.2 auch orthogonal auf der Mantelfläche 82.1 der hohlzylindersegmentförmigen ersten Platte 82 befestigt sein (vgl. Fig. 5). Zwischen den beiden Längsschenkeln sind Anlageflächen 85.1 für die Wicklungsköpfe einer Sattelspulenwicklung. In dem Bereich der Anlageflächen 85.1 ist der bandförmige Wicklungsträger 85 um seine Längsachse (durch Gerade 200 angedeutet) tordiert und um seine Querachse (durch Gerade 210 angedeutet) gebogen, aber nicht um seine sich Richtung der Dicke des bandförmigen Wicklungsträgers erstreckende Achse (durch Gerade 220 angedeutet) gekrümmt (vgl. Fig. 8a bis Fig. 8c). Deshalb ist der maximale, parallel zur Zylinderachse gemessene Abstand d_{O} zwischen den beiden Oberkanten 85.13 der beiden Anlageflächen 85.1 für je einen Wicklungskopf der Sattelspulenwicklung kleiner als der entsprechende Abstand d_{U} der beiden Unterkanten 85.12.

Wird ein bandförmiger Dünnschicht HTSL auf den Wicklungsträger 85 gewickelt, dann liegt dieser an dem Wicklungsträger 85 an und wird deshalb nicht um seine sich in Richtung der Dicke des Bandes erstreckende Achse gebogen, d.h. die HTSL-Schicht auf dem Substrat wird nicht beschädigt. Bevor der bandförmige Dünnschicht HTSL auf den Wickelkörper 80 gewickelt werden kann, wird der bandförmige Wicklungsträger 85 durch Stützen, wie in Fig. 5 gezeigt, ausgesteift. Zudem wird natürlich eine zweite Platte, wie z.B. in Fig. 3 und Fig. 4 gezeigt, auf dem Wicklungsträger 85 befestigt.

## Patentansprüche

1. Wickelkörper (40, 50, 60, 70, 80) mit einem Wicklungsträger (25, 45, 55, 65, 75, 85) zwischen einer ersten Platte (22, 42, 52, 62, 72, 82) und einer zweiten Platte (24, 44) für eine Sattelspulenwicklung aus einem Dünnschicht-HTSL die für einen zylindrischen Läufer einer elektrischen Maschine bestimmt ist und die zwei zur Läuferachse parallele Längsschenkel zwischen zwei Wicklungsköpfen hat, wobei der der Wicklungsträger (25, 45, 55, 65, 75, 85) für jeden Wicklungskopf eine Anlagefläche (75.11, 85.1) hat, **dadurch gekennzeichnet, daß** die erste Platte (22, 42, 52, 62, 72, 82) und die zweite Platte (24, 44) im Bereich der Längsschenkel dem Läuferumfang angepasste Hohlzylindersegmente sind, und dass jede Anlagefläche (75.11, 85.1) für einen Wicklungskopf derart tordiert ist, dass der maximale, parallel zur Zylinderachse gemessene Abstand (d_{O}) zwischen den Oberkanten (75.13, 85.13) der beiden Anlageflächen (75.11, 85.1) kleiner ist als der maximale parallel zur Zylinderachse gemessene Abstand (d_{U}) zwischen den Unterkanten (75.12, 85.12) der Anlageflächen (75.11, 85.1).

2. Wickelkörper (40, 50, 60, 70, 80) nach Anspruch 1, **dadurch gekennzeichnet, dass** die beiden Platten (22, 42, 52, 62, 72, 82, 24,44) zumindest im Bereich der Längschenkel zueinander konzentrisch sind.

3. Wickelkörper (40, 50, 60, 70, 80) nach Anspruch 1 oder 2, **dadurch gekennzeichnet, dass** der Abstand der beiden Platten im Bereich der Wicklungsköpfe kleiner als ihr Abstand im Bereich der Längsschenkel ist.

4. Wickelkörper (40, 50, 60, 70, 80) nach einem der Ansprüche 1 bis 3, **dadurch gekennzeichnet, dass** der Wickelkörper Anlageflächen (85.2) für die Längsschenkel hat und zumindest eine dieser Anlageflächen zumindest in einem Bereich so tordiert ist, dass der magnetische Fluß durch die Schmalseiten des bandförmigen HTSL in diesem Bereich maximal wird, wenn der Längsschenkel durch eine Drehung des Läufers in den Bereich gebracht wird, in dem die magnetische Flußdichte des von außen auf den Läufer wirkenden Magnetfelds maximal ist.

5. Wickelkörper (40, 50, 60, 70, 80) nach einem der Ansprüche 1 bis 4, **dadurch gekennzeichnet, dass** jede Platte (22, 42, 52, 62, 72, 82, 24, 44) im Bereich der Längsschenkel der Sattelspulenwicklung einen Überstand über den entsprechenden Längsschenkel hat.

6. Wickelkörper (40) nach Anspruch 5, **dadurch gekennzeichnet, dass** die Platten (42, 44) im Bereich der Überstände einander gegenüberliegende Nuten haben, in denen mindestens ein Stützelement (46) zur seitlichen Abfangung der Sattelspulenwicklung sitzt.

7. Wickelkörper (60, 70)nach einem der Ansprüche 1 bis 6, **dadurch gekennzeichnet, dass** der Wickelkörper (70) im Bereich jedes Längsschenkels der Sattelspulenwicklung eine Längsstrebe (75.2) hat, die mit zwei Längskanten (65.3) auf der ersten Platte (62, 75) aufliegt.

8. Wickelkörper (60, 70) nach Anspruch 1 bis 7, **dadurch gekennzeichnet, dass** der Wickelkörper (60, 70) im Bereich der beiden Längsschenkel der Sattelspulenwicklung je eine Längsstrebe (75.2) hat, die an ihrer Oberseite jeweils zwei Längskanten (65.4, 75.4) hat, auf denen die zweite Platte aufliegt.

9. Wickelkörper (50, 80) nach einem der Ansprüche 1 bis 8, **dadurch gekennzeichnet, dass** der Wicklungsträger (55, 85) ein geschlossenes Metallband hat, das mit einer der Schmalseiten des Metallbandes auf der Mantelfläche der ersten Platte (52, 82) aufliegt.

10. Wickelkörper (50, 80) nach Anspruch 9, **dadurch gekennzeichnet, dass** die Mantelfläche der ersten Platte (52) durch eine Stütze (59) mit der Innenseite des Metallbandes (55) verbunden ist.

11. Sattelspule, **gekennzeichnet durch** einen Wickelkörper (40, 50, 60, 70, 80) nach einem der vorstehenden Ansprüche, auf dem eine Sattelspulenwicklung aus einem bandförmigen Dünnschicht-HTSL sitzt.

12. Verfahren zum Herstellen einer Sattelspule aus einem bandförmigen Dünnschicht-HTSL durch:
Wickeln eines bandförmigen Dünnschicht-HTSL auf einen Wickelkörper nach einem der Ansprüche 1 bis 10 mit einer Wickelmaschine zu einer Sattelspule, und
Entnehmen des Wickelkörpers mit der HTSL-Wicklung aus der Wickelmaschine.

13. Verfahren nach Anspruch 12, **dadurch gekennzeichnet, dass** nach dem Entnehmen der HTSL auf dem Wickelkörper mit einem Harz fixiert wird.

14. Verfahren zum Ausrüsten eines zylindrischen Läufers mit mindestens einer Sattelspule aus einem bandförmigen Dünnschicht-HTSL durch:
Wickeln eines bandförmigen Dünnschicht-HTSL auf einen Wickelkörper nach einem der Ansprüche 1 bis 10 mit einer Wickelmaschine zu einer Sattelspule,
Entnehmen des bewickelten Wickelkörpers aus der Wickelmaschine, und
Befestigen dieses Wickelkörpers auf dem zylindrischen Läufer.

15. Verfahren nach Anspruch 14, **dadurch gekennzeichnet dass** die Sattelspule nach dem Entnehmen aus der Wickelmaschine imprägniert wird.
